# EUROPEAN PATENT APPLICATION

(11) **EP 2 312 073 A1**
(43) Date of publication of application: **20.04.2011**
(21) Application number: 09806556.8
(22) Date of filing: 03.08.2009
(51) Int. Cl.: E04B 1/66, B32B 15/08, E04D 13/00

(54) **HEAT-INSULATING MOISTURE-PERMEABLE WATERPROOF SHEET**

(30) Priority: 12.08.2008 JP 2008207576
(71) Applicant: Fukuvi Chemical Industry Co., Ltd., Fukui 918-8585 (JP); Chori Co., Ltd., Osaka 541-0047 (JP)
(72) Inventor: NAKAE, Kazuhiro, Tokyo 140-8516 (JP); ASAKO, Takahiro, Osaka-shi Osaka 541-0047 (JP)
(74) Representative: Ward, David Ian
(86) International application number: PCT/JP2009/003689
(87) International publication number: WO 2010/018660

(57) **Abstract**

A building material composite sheet with heat-shielding, moisture permeable and water-proof property is provided, the sheet improving on workability and safety by reducing not infrared reflectivity, but only visible light reflection with its moisture permeability, water-proof property and air permeability kept intact so as to restrain the operators from feeling dazzled in the eyes.

The present building material composite sheet is provided with a moisture permeable and water-proof inner sheet layer 1 and a heat shielding, outer sheet layer 2 comprising a thermoplastic resin substrate 21, a metallic vapor deposited layer 22 having a lustrous metallic material deposited with a certain thickness and formed on the thermoplastic resin substrate 21; a surface protective layer 23 with heat shielding particles 23b substantially uniformly distributed in a transparent thermoplastic resin base 23a and integrally laminated on a surface of the metallic vapor deposited layer 22; and a number of apertures 24 provided in the heat shielding sheet layer 2 with an interval between them, the moisture permeable and water-proof sheet layer 1 being integrally laminated on the heat shielding sheet layer 2. Referenced drawing; Figures 1

## Description

### TECHNICAL FIELD

The invention relates to an improvement on building material composite sheet, in more details, pertaining to a building material composite sheet provided with heat-shielding, moisture permeable and water-proof property, which sheet improves on workability and safety by reducing not infrared reflectivity, but only visible light reflection with its moisture permeability, water-proof property and air permeability kept intact so as to restrain the operators from feeling dazzled in the eyes.

### BACKGROUND ART

As known, on such buildings construction as housings, the overlaying of such sheet as being provided with heat-insulating, moisture permeable and water-proof properties on the wall surface permits physical influences brought by the surroundings to be blocked so as to keep the interior comfortable.

In order to provide such properties with the conventional construction sheet, such structure is disclosed in Patent Document 1 mentioned below as a sheet made of an aluminum vapor deposited film provided with apertures thereon being laminated on the non-woven fabric surface, which structure is provided with moisture permeable and water-proof properties and through which aluminum vapor deposited film infrared rays (far infrared rays) whose wavelength ranges from 2 to 14 µm and visible light whose wavelength ranges from 350 nm to 750 nm are reflected, thereby, stropping radiant heat deriving from such building outer walls as sidings from transmitting to the interior and its wall surface.

However, such sheet structure as mentioned above is indeed found effective for shielding heat through such aluminum vapor deposited film, but the problem lies in a diameter ranging from 0.001 to 0.1 mm of the respective apertures provided on the film surface and the number of such apertures ranging from 250,000 to 500,000 per m², as a total area covered by such apertures with such diameter and number range is too small for such sheet structure to be provided with an appropriate moisture permeable and water-proof properties.

Since the aluminum vapor deposited layer of the above prior art sheet has a large reflectivity of visible light or deflecting more than 90% of such light, such sheet glares so harsh that it takes a lot of labor for the operators to adequately attach the same or risks their safety, which leads to deteriorating the workability on the part of the operators

On the other hand, in order to reduce the reflection of such visible light, there is an option in which such light shielding material as pigments may be disposed on the reflective surface, but such shielding material itself absorbs heat so as to reduce the reflection of infrared rays, so that resolving such ambivalent issue has been sought after.

Further, in Patent Document 2 mentioned below, such sheet provided with heat shielding and moisture permeable and water-proof properties is disclosed as aluminum being vapor deposited directly on cloth or a base like a typically known moisture permeable and water-proof sheet.

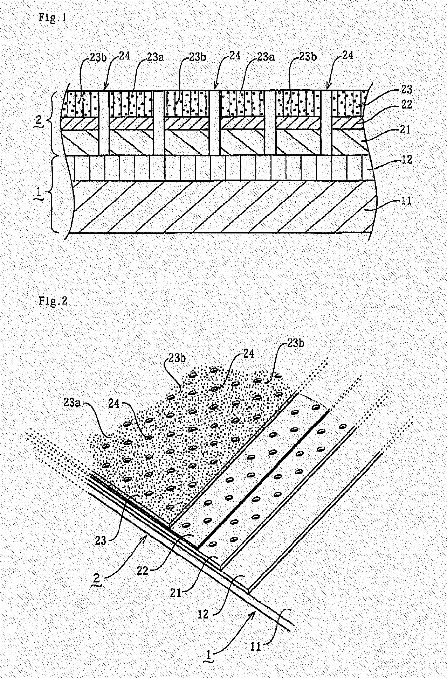

However, on account that aluminum is directly deposited on such base, the cloth mesh is occluded so that it ruins moisture permeability. Moreover, since the surface of the aluminum vapor deposited layer disposed on a non-uniform surface of a non-woven fabric becomes irregular, it causes diffuse reflection of infrared rays so that there is something to be desired for heat shielding property.
Paten Document 1: refer to Pages 2 to 3 and Figure 1 of Japanese Patent Laid-open No.3621452.
Patent Document 2: refer to Pages 3 to 6 as well as Figures 1 and 2 of Japanese Patent Application Laid-open No. 2008-69539

### DISCLOSURE OF THE INVENTION

### TECHNICAL PROBLEM TO BE SOLVED

In view of the foregoing inconveniences encountered with the prior building construction sheet, the invention is to provide a heat-shielding, moisture permeable and water-proof sheet, which sheet improves on workability and safety by reducing not infrared reflectivity, but only visible light reflection with its moisture permeability, water-proof property and air permeability kept intact so as to restrain the operators from feeling dazzled in the eyes.

### MEANS TO SOLVE THE TECHNICAL PROBLEM

As a result of sharp researches by the inventors, they found a building material composite sheet for solving the above technical problem, which will be explained below with the accompanying drawings.

Namely, according to the first aspect of the present invention, there is provided an inventive building material composite sheet provided with heat shielding, moisture permeable and water-proof property which comprises a moisture permeable and water-proof inner sheet layer 1; and a heat shielding outer sheet layer 2 integrally laminated on the inner sheet layer 1,
wherein the heat shielding outer sheet layer 2 comprises a thermoplastic resin substrate 21; a metallic vapor deposited layer 22 having a lustrous metallic material vapor deposited with a certain thickness; a surface protective layer 23 integrally laminated on a surface of the metallic vapor deposited layer 22 where light shielding particles 23b are substantially uniformly distributed in a thermoplastic resin base 23a, and a number of apertures 24 penetrating through the heat shielding outer layer and distributed over the heat shielding outer layer with a determined interval, in a manner that the metallic vapor deposited layer 22 reflects infrared rays while the light shielding particles 23b together with apertures 24 reduce the reflection of visible light in the metallic vapor deposited layer 22.

In a preferred embodiment of the present invention, in addition to the above arrangement, the lustrous metallic material of the metallic vapor deposited layer 22 according to the invention is made from aluminum.

In another preferred embodiment of the present invention, an average diameter of the light shielding particle 23b of the surface protective layer 23 according to the invention ranges from 5 to 300 nm.

Further, the light shielding particle 23b of the surface protective layer 23 according to the invention is made from titanium oxide.

Moreover, the content of titanium oxide comprising the light shielding particles 23b according to the invention ranges from 0.1 to 1.5 weight part (preferably, ranging from 0.2 to 1.0 weight part) to 100 weight part of the thermoplastic resin base 23a.

Furthermore, the thickness of the surface protective layer 23 according to the invention ranges from 10 to 15µm.

In addition to the above, a diameter of the aperture 24 according to the invention ranges from 0.3 to 0.7 mm and the apertures 24 are distributed with a density ranging from five hundred thousands to one million per m² in the heat shielding sheet surface.

Further, the moisture permeable and water-proof sheet layer 1 according to the invention is formed by integrally attaching a porous moisture permeable and water-proof film 12 on the surface of a non-woven fabric 11.

### EFFECT

The building material composite sheet according to the invention provided with heat shielding, moisture permeable and water-proof property comprises a moisture permeable and water-proof inner sheet layer 1; and a heat shielding, outer sheet layer 2 integrally laminated on the inner sheet layer 1, the heat shielding outer sheet layer 2 comprising a thermoplastic resin substrate 21; a metallic vapor deposited layer 22 having a lustrous metallic material vapor deposited with a certain thickness; a surface protective layer 23 integrally laminated on a surface of the metallic vapor deposited layer 22 where light shielding particles 23b are substantially uniformly distributed in a transparent thermoplastic resin base 23a; and a number of apertures 24 penetrating through the heat shielding outer layer and being distributed over the heat shielding outer layer with a determined interval, in a manner that the metallic vapor deposited layer 22 reflects infrared rays while the light shielding particles 23b together with the apertures 24 reduce the reflection of visible light in the metallic vapor deposited layer 22

In view of the foregoing, the building material composite sheet according to the invention improves on workability and safety by reducing not infrared reflectivity, but only visible light reflection with its moisture permeability, water-proof property and air permeability kept intact so as to restrain the operators from feeling dazzled in the eyes, so that the industrial applicability of the invention is very high.

### BEST MODE FOR CARRYING OUT THE INVENTION

The preferred embodiment of the invention is described below with reference to the accompanying drawings.

The embodiment is explained based on Figures 1 to 4. In Figure 1, reference numeral 1 indicates a moisture permeable and water-proof sheet layer, the arrangement of which layer is not specifically defined, just provided that it is provided with moisture permeable and water-proof properties, but is exemplified herein by integrally attaching a porous moisture permeable and water-proof film 12 on a non-woven fabric 11

The non-woven fabric 11 preferably consists of a spun-bond non-woven fabric or a needle punched non-woven fabric, among others, more preferably, consisting of such spun-bond and needle punched non-woven fabric as made from polyester, polypropylene, polyethyleneterephthalate. The mass per unit area of the non-woven fabric 11 preferably ranges from 20 to 100 g/m² (herein, 50 g/m²). Such range prevents the outer porous polyolefin based film layer from being exposed and damaged during the attachment of the sheet and makes such moisture permeable and water-proof sheet excellent in light weight, heat retaining, sound-proof and shock-absorbing properties.

The moisture permeable and water-proof film 12 according to the embodiment is made of a porous air permeable film made from polyethylene (PE), the respective pores provided on the surface of which are about 17 µm in diameter.

Reference numeral 2 indicates a heat shielding sheet layer. For the formation of such heat shielding sheet layer, firstly, a lustrous metallic material is vapor deposited with a certain thickness on a sheet-like thermoplastic substrate 21 so as to provide a metallic vapor deposited layer 22 thereon The thermoplastic substrate 21 according to the invention is made from oriented polypropylene (OPP) and has 20 µm in thickness. The lustrous metallic material of the metallic vapor deposited layer 22 is made from aluminum good at light reflection and vapor deposited with ease, the thickness of which metallic vapor deposited layer is 45 nm.

Secondly, a surface protective layer 23, in which light shielding particles 23b are mixed with a transparent thermoplastic base 23a and substantially uniformly distributed in the base, is integrally laminated on the metallic vapor deposited layer 22. In this embodiment, the thermoplastic base 23a is made from linear low density polyethylene.

The light shielding particles 23b are made from titanium oxide (TiO₂) and the content of titanium oxide ranges from 0.1 to 1.5 weight part (more preferably ranging from 0.2 to 1.0 weight part) to 100 weight part of the thermoplastic base 23a, the average diameter of which particles respectively ranges from 5 to 300 nm (herein, 210 nm), thereby, favorable reduction of visible light reflection being realized. To note, such content being 0.1 weight part or less, the reduction of visible light reflectivity deteriorates while being 1.5 weight part or more, infrared reflectivity deteriorates.

Further, in the embodiment, defining the thickness of the surface protective layer 23 as ranging from 10 to 15 µm (herein, 12 µm) allows the reflectivity of the respective rays to be adjusted in a proper manner. To note, such thickness being 10 µm or less, the durability of such protective layer deteriorates so as to be likely to do damage on the metallic vapor deposited layer 22 while being 15µm or more, infrared reflectivity deteriorates and the production cost increases.

There are provided a number of apertures 24 with an interval between them in the heat shielding sheet layer as laminated above. The diameter of the apertures respectively ranges from 0.3 to 0.7 mm (more preferably, ranging from 0.4 to 0.6 mm; herein, 0.4 mm), which apertures are distributed in the sheet layer with a density ranging from 500 thousands to one million /m² (more preferably, ranging from 500 thousands to 900 thousands/m²; herein 600 thousands/m²). The ratio by which the apertures 24 are provided on the sheet surface ranges from 10 to 15%.

The above arrangement allows the visible light reflection to reduce with good moisture permeable and water proof properties and air permeability kept intact. To note, the diameter of the respective apertures 24 being 0.3 mm or less or the density by which such apertures are distributed being 500 thousands or less/m², moisture permeability deteriorates while the former being 0.7 mm or more or the latter being one million or more /m², the infrared reflectivity, deteriorates.

Then, the moisture permeable and water-proof film 12 is integrally laminated on the thermoplastic substrate 21 through a hot melt adhesive (olefin based, rubber based, EVA based, acrylic based and so on) , thereby, the heat shielding, moisture permeable and water-proof sheet according to the invention being produced (refer to Figure 2)

The above arrangement allows infrared rays to be reflected by the metallic vapor deposited layer 22 and the reflection of visible light in the metallic vapor deposited layer 22 to reduce by the light shielding particles 23b and the apertures 24.

### INFRARED REFLECTION TEST

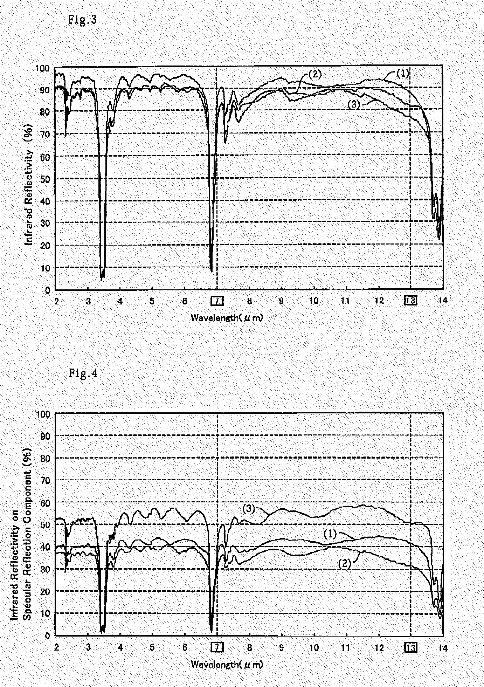

Then, the results of the tests on the infrared reflection performance by the building material composite sheet according to the invention are explained on the basis of the graphs shown in Figures 3 to 5. The samples represented with (1) to (3) in the drawings indicate respectively :(1) 0.6 weight part of titanium oxide being mixed with the thermoplastic base according to the invention; (2) 1.0 weight part of titanium oxide being mixed therewith according to the invention; and (3) only the thermoplastic base not containing titanium oxide therein and appearing on the outermost surface according to the prior art. For measurement, an arbitrary portion of the respective sheet samples is cut out by about 3 cm in square The area of each sample on which the test is carried out is 10 mm in diameter at the center thereof.

### Analyses Method

To analyze the infrared reflectivity of those samples, FT-IR (Fourier Transform Infrared Spectroscopy) is put to use

### Measuring Method

In the test, the infrared reflectivity, measurement of those samples is carried out by use of an integrating sphere for infrared spectroscopy. Such measurement is performed twice in the vicinity at the center of the respective samples, the averaged value of which measurements corresponds to a measured value. The details of an instrument to be used for such measurement and the conditions under which such measurement is performed are as follows
Measuring Instrument: IFS-66v/S (Bruker FT-IR spectrometer, vacuum optics)
Light source: SiC-Globar
Detector: MCT (HgCdTe)
Beam splitter- Ge/KBr

### Measuring conditions

Resolution: 4 cm⁻¹
Number of scans: 512 times
Zero filling: twice
Apodization: triangle
Measuring range: 5000 to 715 cm⁻¹(2 to 14µm)
Measuring temperature: room temperature (about 25 degrees Centigrade)
Accessory equipment: Integrating sphere for measuring transmissivity and reflectivity

### (Measuring reflectivity)

Reference samples: diffuse-gold coating (produced by Labsphere, Inc.) for diffuse reflection component; Au vapor deposited film (preliminarily measured) for specular reflection component
Incident angle: 10 degrees
Light spot diameter: about 10 mm in diameter
Repetition precision: about ± 1%

### Using a specular trap for measuring diffuse reflection component

### (Measuring Transmissivity)

Incident angle: 0 degree
Light spot diameter: about 10 mm in diameter
Repetition precision: about ±1%

### Measuring Result

As a result of the above measurement, the resulting infrared reflectivity, spectra are shown in Figures 3 to 5 (wavelength ranging from 2 to 14µm).
Figure 3 shows an infrared reflectivity spectrum of the respective samples.
Figure 4 shows an infrared reflectivity, spectrum on specular reflection component of the respective samples.
Figure 5 shows an infrared reflectivity spectrum on diffuse reflection component of the respective samples.

According to the above results as shown in the graphs, it is found that the samples according to the invention show higher infrared reflectivity within wavelengths ranging from 2 to 35 µm. To note, a peaked wavelength of infrared rays irradiated by ceramic based sidings used as typical outer wall materials ranges from 7 to 13 µm. According to Wien's displacement law by which the relation between the temperature rise of a heating element and a peaked wavelength of infrared rays irradiated by such element is defined, when the temperature of the outer wall ranges from 50 to 70 degrees Centigrade, the peaked wavelength of infrared rays ranges from 8 to 9 µm. However, there is latitude at the peak region, so that it is reasonable to define the shorter wavelength as 7µm and the longer one as 13 µm.

### Visible Light Reflection Test

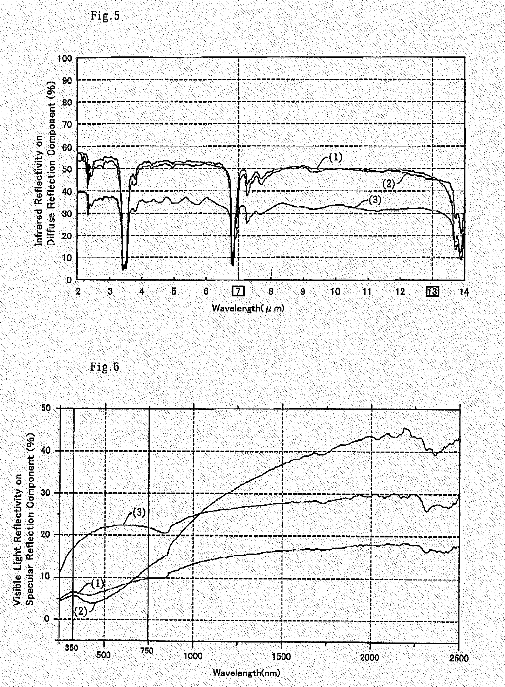

Then, the test result on visible light reflection by the sample sheets according to the invention is explained on the basis of Figure 6.

### Analysis Method

The visible light transmissivity and reflectivity are measured by use of an integrating sphere.
Measuring Instrument- UV-3101PC autograph spectrophotometer manufactured by Shimadzu Corporation
Slit width: 30 nm {7.5 (250-860), 30(-2500)}
Slit program: normal
Measuring speed: slow (about 4 points/second)
Light sources: Halogen lamp (for 340 nm or more); Heavy hydrogen lamp (for less than 340 nm)
Detectors: PMT (for 860 nm or less);
   PbS (for more than 860 nm)
Subsidiary white plate: BaSO₄
Incident angle: 7 degrees
Reference white plate: produced by Labsphere, Inc. in USA for diffuse reflection component
Aluminum vapor deposited mirror: preliminarily measured by Toray Industries, Inc. for specular reflection component
Accessory equipment: Large-sized sample housing (60 mm in diameter) for Transmissivity spectrum; Large-sized integrating sphere (150 mm in diameter) for reflectivity spectrum;
   Data processing device (MBC17JH20/PC9801)

### Result and Review

Figure 6 shows a visible light reflectivity, spectrum on specular reflection component of the respective samples. The samples (1) to (3) shown in the graphs respectively indicate: (1) 0.6 weight part of titanium oxide being mixed with the thermoplastic base according to the invention; (2) 1.0 weight part of titanium oxide being mixed therewith according to the invention; and (3) only the thermoplastic base not containing titanium oxide therein and appearing on the outermost surface according to the prior art. The samples (1) and (2) according to the invention are shown that they reduce visible light reflectivity ranging from 350 to 750 nm

### Moisture Permeability Test

The moisture permeability of the respective samples according to the invention is measured in accordance with moisture permeability test method (moisture permeable resistance) defined in JIS A 6111 2004.

### Water-proofness Test

The water-proofness of the respective samples according to the invention is measured in accordance with water-proofness test method (hydrostatic pressure) defined in JIS A 6111 2004.

The above test results are shown in the following table.

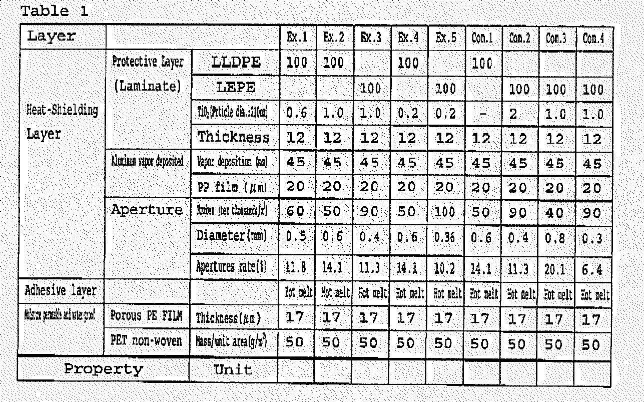

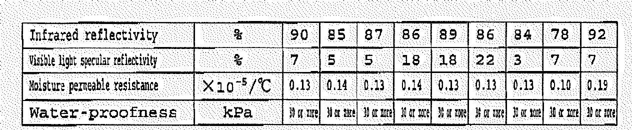

It is confirmed by the above Table 1 that the example samples (Ex.1 to 5) according to the invention show higher far infrared reflectivity, or 85% or more and lower visible light reflectivity, or 10% or less.

The invention has been substantially described above, but the invention is not limited to the embodiment shown in the accompanying drawings. The invention may be modified intro various manners within the scope of the accompanying patent claims. For instance, the thermoplastic resin material adopted for the sheet according to the invention may include low density polyethylene (LDPE), linear low density polyethylene (LLDPE), polyethyleneterephthalate (PET) and polypropylene (PP)

Further, the light shielding particles 23b contained in the protective layer 23 are not limited to titanium oxide, but may comprise other white pigments, any of which modifications belongs to the technical scope of the invention.

### BRIEF DESCRIPTION OF THE DRAWINGS

Figure 1 is a cross-sectional view of a sheet structure embodied in the invention.
Figure 2 is a broken perspective view of a sheet structure embodied in the invention.
Figure 3 is a graph showing the measured result of infrared reflectivity of a sheet embodied in the invention.
Figure 4 is a graph showing the measured result of infrared reflectivity on specular reflection component of a sheet embodied in the invention.
Figure 5 is a graph showing the measured result of infrared reflectivity on diffuse reflection component of a sheet embodied in the invention
Figure 6 is a graph showing the measured result of visible light reflectivity on specular reflection component of a sheet embodied in the invention.

### Nomenclature

1 moisture permeable and water-proof sheet layer
11 non-woven fabric
12 moisture permeable sheet
2 heat shielding sheet layer
21 thermoplastic resin substrate
22 metallic vapor deposited layer
23 surface protective layer
23a thermoplastic base
23b light shielding particles
24 aperture

## Claims

1. A building material composite sheet provided with heat shielding, moisture permeable and water-proof property, which comprises a moisture permeable and water-proof inner sheet layer 1; and a heat shielding outer sheet layer 2 integrally laminated on the inner sheet layer 1,
wherein the heat shielding outer sheet layer 2 comprises a thermoplastic resin substrate 21; a metallic vapor deposited layer 22 having a lustrous metallic material vapor deposited with a certain thickness; a surface protective layer 23 integrally laminated on a surface of the metallic vapor deposited layer 22 where light shielding particles 23b are substantially uniformly distributed in a transparent thermoplastic base 23a; and a number of apertures 24 penetrating through the heat shielding outer layer and being distributed over the heat shielding outer layer with a determined interval, in a manner that the metallic vapor deposited layer 22 reflects infrared rays while the light shielding particles 23b together with the apertures 24 reduce the reflection of visible light in the metallic vapor deposited layer 22.

2. The building material composite sheet provided with heat shielding, moisture permeable and water-proof property according to claim 1, wherein the lustrous metallic material of the metallic vapor deposited layer 22 is made from aluminum.

3. The building material composite sheet provided with heat shielding, moisture permeable and water-proof property according to claim 1 or 2, wherein an average diameter of the light shielding particle 23b of the surface protective layer 23 ranges from 5 to 300 nm.

4. The building material composite sheet provided with heat shielding, moisture permeable and water-proof property according to any one of the preceding claims, wherein the light shielding particle 23b of the surface protective layer 23 is made from titanium oxide.

5. The building material composite sheet provided with heat shielding, moisture permeable and water-proof property according to any one of the preceding claims, wherein a content of titanium oxide comprising the light shielding particles 23b ranges from 0.1 to 1.5 weight part to 100 weight part of the thermoplastic resin base 23a.

6. The building material composite sheet provided with heat shielding, moisture permeable and water-proof property according to any one of the preceding claims, wherein a thickness of the surface protective layer 23 ranges from 10 to 15µm.

7. The building material composite sheet provided with heat shielding, moisture permeable and water-proof property according to any one of the preceding claims, wherein a diameter of the aperture 24 ranges from 0 3 to 0 7 mm and the apertures 24 are distributed with a density ranging from five hundred thousands to one million per m² in a surface of the heat shielding sheet.

8. The building material composite sheet provided with heat shielding, moisture permeable and water-proof property according to any one of the preceding claims, wherein the moisture permeable and water-proof sheet layer 1 is formed by integrally attaching a porous moisture permeable and water-proof film 12 on a surface of a non-woven fabric 11.
